# EUROPEAN PATENT APPLICATION

(11) **EP 3 242 207 A1**
(43) Date of publication of application: **08.11.2017**
(21) Application number: 15874627.1
(22) Date of filing: 30.01.2015
(51) Int. Cl.: G06F 9/48

(54) **METHOD, DEVICE AND TERMINAL FOR SWITCHING OPERATING SYSTEM**

(30) Priority: 29.12.2014 CN 201410842537
(71) Applicant: Yulong Computer Telecommunication Scientific (Shenzhen) Co., Ltd., Shenzhen, Guangdong 518057 (CN)
(72) Inventor: YIN, Deyi, Shenzhen Guangdong 518057 (CN); YE, Ruiquan, Shenzhen Guangdong 518057 (CN)
(74) Representative: Cordina, Kevin John
(86) International application number: PCT/CN2015/071988
(87) International publication number: WO 2016/106934

(57) **Abstract**

A method, a device and a terminal for switching an operating system provided in the present disclosure, are related to a field of information technology and can simplify operations and improve user experience. The method includes: firstly detecting whether a second application in a second operating system is ended when a running operating system in user equipment is switched from a first operating system to the second operating system; switching the running operating system in the user equipment from the second operating system back to the first operating system when the second application is ended, and running a first application. The present disclosure is applicable to the user equipment to switch the running operating system from the second operating system back to the first operating system and run the first application.

## Description

### CROSS-REFERENCE TO RELATED APPLICATIONS

This application claims priority of Chinese Patent Application No. 201410842537.2, entitled "method, device and terminal for switching operating systems," filed on December 29, 2014 in the SIPO (State Intellectual Property Office of the People's Republic of China), the entire contents of which are incorporated by reference herein.

### FIELD

The embodiments of the present disclosure relate to field of information technology, and specifically to a method, a device, and a terminal for switching operating systems.

### BACKGROUND

With development of information technology, usage of user equipment is increasingly wide, and functions of user equipment are more and more available. Currently, the user equipment can have two operating systems simultaneously, and the two operating systems in the user equipment can be switched.

At present, in a method for switching operating systems, when a first application in a first operating system is running in an user equipment and a prompting message corresponding to a second application in a second operating system is received, the user equipment must switch a current running operating system from the first operating system to the second operating system and run the second application. When the second application is ended, the user equipment could switch the current running operating system from the second operating system back to the first operating system.

However, when the user equipment switches the current running operating system from the second operating system back to the first operating system, the user equipment needs to detect an operation instruction inputted by a user to run the first application. That is, the user needs to manually select the first application to be run in the first operating system, therefore, the operation is tedious, and user experience is low.

### SUMMARY

The present disclosure provides a method, a device and a terminal for switching operating systems, the present disclosure can simplify operations and improve user experience.

The technical solution adopted by the present disclosure is as follows:
According to a first aspect, the present disclosure provides a method for switching operating systems, and the method includes:
Detecting whether a second application in a second operating system is ended when a running operating system in user equipment is switched from a first operating system to the second operating system;
Switching the running operating system in the user equipment from the second operating system back to the first operating system when the second application is ended, and running a first application, the first application being a running application in the first operating system before the user equipment switches the running operating system from the first operating system to the second operating system.

According to a second aspect, the present disclosure provides a device for switching operating systems, and the device includes:
A detection unit, which is configured to detect whether a second application in a second operating system is ended when a running operating system in user equipment is switched from a first operating system to the second operating system;
A switching unit, which is configured to switch the running operating system in the user equipment from the second operating system back to the first operating system when the second application is ended;
A running unit, which is configured to run a first application, the first application being a running application in the first operating system before the user equipment switches the running operating system from the first operating system to the second operating system.

According to a third aspect, the present disclosure provides a terminal, which includes the device for switching operating systems provided in the second aspect.

The method, the device and the terminal for switching operating systems, provided by the present disclosure, firstly detects whether the second application in the second operating system is ended when the running operating system in the user equipment is switched from the first operating system to the second operating system, switches the running operating system in the user equipment from the second operating system back to the first operating system when the second application is ended, and runs the first application. Compared with the prior art, by automatically detecting whether the second application in the operating system is ended, the present disclosure can switch the running operating system from the second operating system back to the first operating system and run the first application in the first operating system according to an automatic detection result. That is, when detecting that the second application in the second operating system is ended, the user equipment can switch back to the first operating system and run the first application, thereby avoiding manually selecting a first application to be run in the first operating system by the user, and further simplifying the operations and improving the user experience.

### BRIEF DESCRIPTION OF THE DRAWINGS

To describe the technical solutions in embodiments of the present disclosure or in the prior art more clearly, the following briefly introduces the accompanying drawings needed for describing the embodiments. Apparently, the accompanying drawings in the following description show merely some embodiments of the present disclosure, and persons of ordinary skill in the art may still derive other drawings from these accompanying drawings without creative efforts.
FIG. 1 is a flowchart of a method for switching operating systems in one embodiment of the present disclosure;
FIG. 2 is a flowchart of another method for switching operating systems in one embodiment of the present disclosure;
FIG. 3 is a device structure diagram of a system for switching operating systems in one embodiment of the present disclosure;
FIG. 4 is a device structure diagram of another system for switching operating systems in one embodiment of the present disclosure;
FIG. 5 is a structure diagram of a terminal in one embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by persons of ordinary skill in the art based on the embodiments of the present disclosure without creative efforts shall fall within the protective scope of the present disclosure.

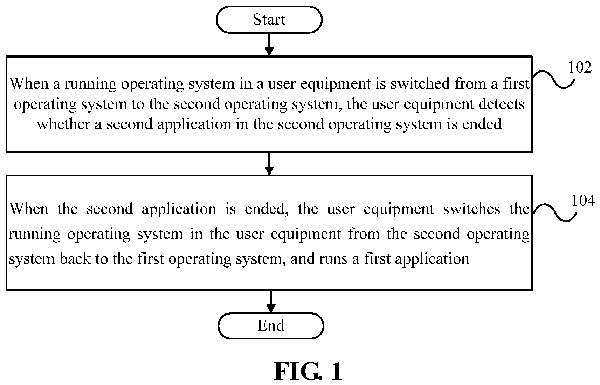

In one embodiment of the present disclosure, a method for switching operating systems is provided, and can simplify operations and improve user experiences. As shown in FIG. 1, the method includes:

101, when a running operating system in user equipment is switched from a first operating system to the second operating system, the user equipment detects whether a second application in the second operating system is ended.

In one embodiment of the present disclosure, an operating system is a computer program that manages and controls computer hardware and software resources, and may run in the user device directly. Other software must run based on support of the operating system.

In one embodiment of the present disclosure, the user equipment includes at least two operating systems. Each of the operating systems includes corresponding applications, and each of the operating systems in the user equipment is independent and does not interfere with each other.

102, when the second application is ended, the user equipment switches the running operating system in the user equipment from the second operating system back to the first operating system, and runs a first application.

The first application is a running application in the first operating system before the user equipment switches the running operating system from the first operating system to the second operating system.

For example, an electronic books application included in the first operating system is running in the user equipment, which switches from the first operating system to the second operating system and runs a short message application included in the second operating system. If the short message application is ended, the user equipment switches from the second operating system back to the first operating system and runs the electronic books application.

In the method for switching operating systems provided in one embodiment of the present disclosure, when the running operating system in the user equipment is switched from the first operating system to the second operating system, firstly detecting whether the second application in the second operating system is ended; when the second application is ended, switching the running operating system in the user equipment from the second operating system back to the first operating system and running the first application. Compared with a current method that the user equipment switches the running operating system from the second operating system back to the first operating system, by automatically detecting whether the second application in the operating system is ended, the embodiment of the present disclosure can switch the running operating system from the second operating system back to the first operating system and run the first application in the first operating system according to an automatic detection result. That is, when detecting that the second application in the second operating system is ended, the user equipment can switch back to the first operating system and run the first application, thereby avoiding manually selecting a first application to be run in the first operating system by the user, and further simplifying the operations and improving the user experience.

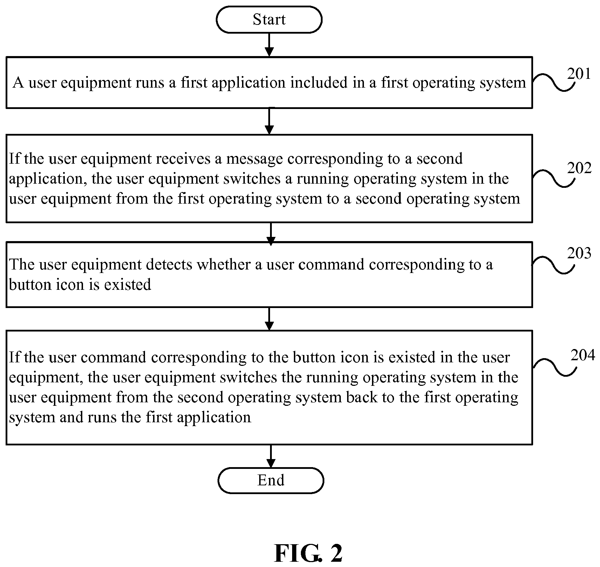

For describing the method shown in FIG. 1 specifically, another method for switching operating systems is provided in one embodiment of the present disclosure. As shown in FIG. 2, the method includes:
201, user equipment runs a first application included in a first operating system.

The user equipment can run at least two operating systems.

In one embodiment of the present disclosure, both of the operating systems may include respective pluralities of applications. For example, an operating system may include applications of short messages, electronic books, videos, and WECHAT™ messages, and so on.

202, if the user equipment receives a message corresponding to a second application, the user equipment switches the running operating system in the user equipment from the first operating system to the second operating system.

According to one embodiment of the present disclosure, the message corresponding to the second application is used for notifying the user equipment to run the second application. In one embodiment of the present disclosure, the first operating system is running in the user equipment. If the second application in the second operating system needs to be processed, the user equipment receives the message corresponding to the second application and switches the running operating system in the user equipment from the first operating system to the second operating system.

Alternatively, before the step 202, the method further includes: determining whether the message corresponding to the second application is an instant message by the user equipment.

According to one embodiment of the present disclosure, the instant message is a message that the user equipment needs to process timely. For example, the instant message may be text chat messages, file transmission, splash screen vibration, voice communication, video communication, and so on.

Alternatively, step 202 includes: switching from the first operating system to the second operating system if the message corresponding to the second application is the instant message.

According to one embodiment of the present disclosure, if the message corresponding to the second application is not an instant message, the user equipment may continue running the first operating system. For example, the instant message may be an updating message of the electronic books and an updating message of games, and so on.

According to one embodiment of the present disclosure, by determining whether the message corresponding to the second application is an instant message, the user equipment can determine whether to switch the running operating system or not. That is, if the message corresponding to the second application is an instant message, the user equipment switches the running operating system; if the message corresponding to the second application is not an instant message, the user equipment does not switch the running operating system. Therefore, power consumption of the user equipment can be reduced and the user experiences can be improved.

203, the user equipment detects whether a user command corresponding to a button icon is existed.

Alternatively, before step 203, the method further includes: displaying the button icon when the running operating system in the user equipment is switched from the first operating system to the second operating system;

The button icon is used to switch the running operating system in the user equipment from the second operating system back to the first operating system and run the first application.

For example, the electronic books application in the first operating system is running in the user equipment. If the user equipment switches the running operating system from the first operating system to the second operating system, a button icon of the electronic books application is displayed on a desktop of the second operating system. When a user clicks the button icon, the user equipment switches back to the electronic books application corresponding to the first operating system.

204, if the user command corresponding to the button icon is existed in the user equipment, the user equipment switches the running operating system in the user equipment from the second operating system back to the first operating system and runs the first application.

According to one embodiment of the present disclosure, if the user clicks the button icon, it is determined that the user command corresponding to the button icon is existed in the user equipment. Then the user equipment switches the running operating system in the user equipment from the second operating system back to the first operating system and runs the first application.

According to one embodiment of the present disclosure, by receiving the user command corresponding to the button icon inputted by the user, the user equipment can switch the running operating system in the user equipment from the second operating system back to the first operating system and run the first application. Thus, the user does not need to select the first application to be run in the first operating system manually, the operations is simplified and the user experiences is improved.

In the method for switching operating systems provided in the embodiments of the present disclosure, when the running operating system in the user equipment is switched from the first operating system to the second operating system, firstly detecting whether the second application in the second operating system is ended; when the second application is ended, switching the running operating system in the user equipment from the second operating system back to the first operating system and running the first application. Compared with a current method that the user equipment switches the running operating system from the second operating system back to the first operating system, by automatically detecting whether the second application in the operating system is ended, the embodiment of the present disclosure can switch the running operating system from the second operating system back to the first operating system and run the first application in the first operating system according to an automatic detection result. That is, when detecting that the second application in the second operating system is ended, the user equipment can switch back to the first operating system and run the first application, thereby avoiding manually selecting a first application to be run in the first operating system by the user, and further simplifying the operations and improving the user experience.

Moreover, in the method for switching operating systems provided in the embodiments of the present disclosure, by determining whether the message corresponding to the second application is an instant message, the user equipment can determine whether to switch the running operating system or not. That is, if the message corresponding to the second application is an instant message, the user equipment switches the running operating system; if the message corresponding to the second application is not an instant message, the user equipment does not switch the running operating system. Therefore, the power consumption of the user equipment can be reduced and the user experiences can be improved. By receiving the user command corresponding to the button icon inputted by the user, the user equipment can switch the running operating system in the user equipment from the second operating system back to the first operating system and run the first application. Thus, the user does not need to select the first application to be run in the first operating system manually, the operations is simplified and the user experiences is improved.

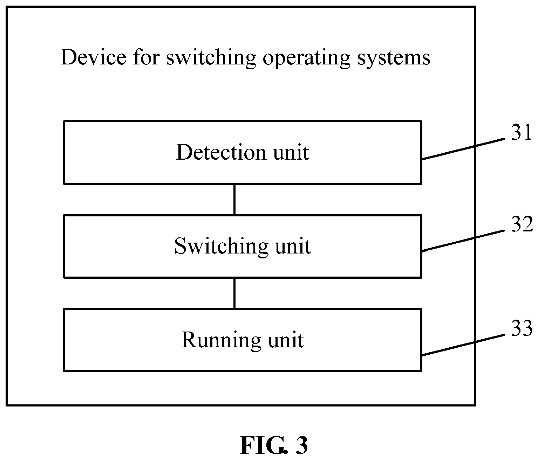

For realization of the methods shown in FIG. 1 and FIG. 2, one embodiment of the present disclosure further provides a device for switching operating systems. The device is installed in user equipment and used to simplify the operations and improve the user experiences. As shown in FIG. 3, the device includes: a detection unit 31, a switching unit 32, a running unit 33.

The detection unit 31 is used to detect whether a second application in a second operating system is ended when a running operating system in user equipment is switched from a first operating system to the second operating system.

The switching unit 32 is used to switch the running operating system in the user equipment from the second operating system back to the first operating system when the detection unit 31 detects that the second application is ended.

The running unit 33 is used to run a first application.

The first application is a running application in the first operating system before the user equipment switches the running operating system from the first operating system to the second operating system.

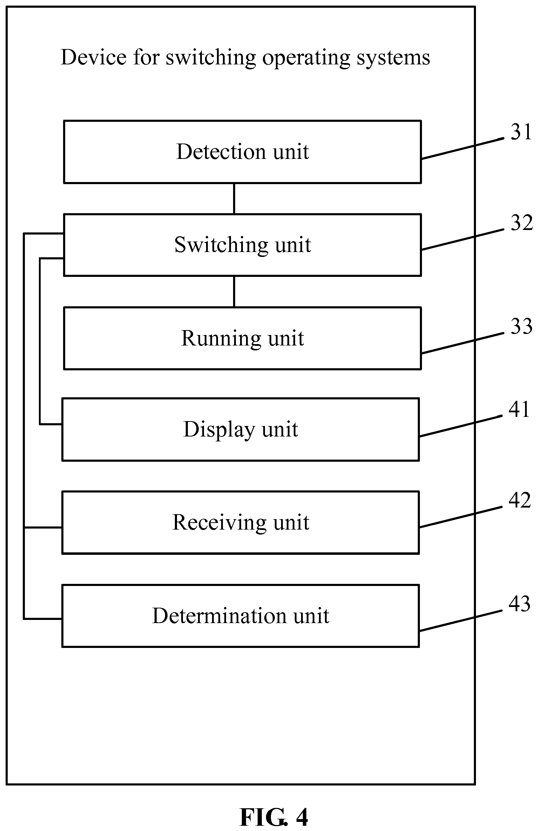

Moreover, as shown in FIG. 4, the device further includes a display unit 41.

The display unit 41 is used to display a button icon when the running operating system in the user equipment is switched from the first operating system to the second operating system.

The button icon being used to switch the running operating system in the user equipment from the second operating system back to the first operating system and run the first application.

The user equipment can run at least two operating systems.

The detection unit 31 is used to detect whether a user command corresponding to a button icon is existed.

The switching unit 32 is used to switch the running operating system in the user equipment from the second operating system back to the first operating system when the detection unit 31 detects that the user command corresponding to the button icon is existed.

The running unit 33 is further used to run the first application.

The running unit 33 is further used to run the first application included in the first operating system.

Alternatively, as shown in FIG. 4, the device further includes a receiving unit 42.

The receiving unit 42 is used to receive a message corresponding to the second application.

The switching unit 32 is used to switch from the first operating system to the second operating system when the receiving unit 42 receives the message corresponding to the second application.

Alternatively, as shown in FIG. 4, the device further includes a determination unit 43.

The determination unit 43 is used to determine whether the message corresponding to the second application received by the receiving unit 42 is an instant message by the user equipment.

The switching unit 32 is used to switch from the first operating system to the second operating system if the determination unit 43 determines that the message corresponding to the second application is the instant message.

According to the device for switching operating systems provided in the embodiments of the present disclosure, when the running operating system in the user equipment is switched from the first operating system to the second operating system, firstly detecting whether the second application in the second operating system is ended; when the second application is ended, switching the running operating system in the user equipment from the second operating system back to the first operating system and running the first application. Compared with a current method that the user equipment switches the running operating system from the second operating system back to the first operating system, by automatically detecting whether the second application in the operating system is ended, the embodiment of the present disclosure can switch the running operating system from the second operating system back to the first operating system and run the first application in the first operating system according to an automatic detection result. That is, when detecting that the second application in the second operating system is ended, the user equipment can switch back to the first operating system and run the first application, thereby avoiding manually selecting a first application to be run in the first operating system by the user, and further simplifying the operations and improving the user experience.

Moreover, according to the device for switching operating systems provided in the embodiments of the present disclosure, by determining whether the message corresponding to the second application is an instant message, the user equipment can determine whether to switch the running operating system or not. That is, if the message corresponding to the second application is an instant message, the user equipment switches the running operating system; if the message corresponding to the second application is not an instant message, the user equipment does not switch the running operating system. Therefore, the power consumption of the user equipment can be reduced and the user experiences can be improved. By receiving the user command corresponding to the button icon inputted by the user, the user equipment can switch the running operating system in the user equipment from the second operating system back to the first operating system and run the first application. Thus, the user does not need to select the first application to be run in the first operating system manually, the operations is simplified and the user experiences is improved.

It should be noted that, other descriptions corresponding to the various units in the device for switching operating systems provided in one embodiment of the present disclosure can refer to descriptions in FIG. 1 and FIG. 2, these are not repeated here.

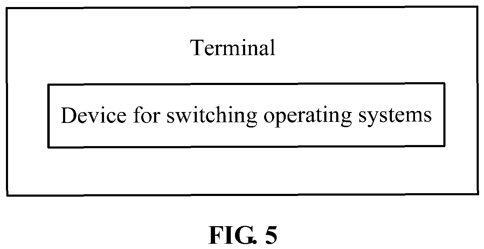

Embodiments of the present disclosure further provides a terminal, as shown in FIG. 5, the terminal includes any device for switching operating systems as mentioned in FIG. 3 and FIG. 4.

The device and terminal for switching operating systems in the embodiments of the present disclosure can realize the method in the embodiments as mentioned above, detailed realization of functions can referred to the descriptions in method embodiments, no more description is repeated here. The method, the device and the terminal for switching operating systems provided in the embodiments of the present disclosure, are applicable to user equipment to switch a running operating system from a second operating system back to a first operating system, and to run a first application, but is not limited here.

One skilled in the art will understand that, all or part of the processes in the methods described in the above embodiments may be implemented by a computer program to instruct relevant hardware. The program may be stored in a computer readable storage medium. When the program is running, flows of the methods the steps of the method described in the above embodiments can be included. The storage medium may be a magnetic disk, an optical disk, a read only memory (ROM) or a random access memory (RAM), and the like.

The above descriptions are merely specific embodiments of the present disclosure, the protective scope of the present disclosure is not limited thereto. Within the technical scope disclosed by the present disclosure, modifications or replacements that easily considered by any person skilled in the art shall fall within the protective scope of the present disclosure. Accordingly, the scope of the present disclosure shall be within the protective scope of the claims.

## Claims

1. A method for switching operating systems, comprising:
detecting whether a second application in a second operating system is ended when a running operating system in user equipment is switched from a first operating system to the second operating system;
switching the running operating system in the user equipment from the second operating system back to the first operating system when the second application is ended, and running a first application, the first application being a running application in the first operating system before the user equipment switches the running operating system from the first operating system to the second operating system.

2. The method for switching operating systems of claim 1, further comprising:
displaying a button icon when the running operating system in the user equipment is switched from the first operating system to the second operating system, the button icon being used to switch the running operating system in the user equipment from the second operating system back to the first operating system and run the first application;
and wherein the step of detecting whether the second application in the second operating system is ended comprises:
detecting whether a user command corresponding to the button icon is existed;
and wherein the step of switching the running operating system in the user equipment from the second operating system back to the first operating system and running a first application when the second application is ended comprises:
switching the running operating system in the user equipment from the second operating system back to the first operating system if the user command corresponding to the button icon is existed, and running the first application.

3. The method for switching operating systems of claim 1, before the step of detecting whether the second application in the second operating system is ended, further comprising:
running the first application in the first operating system;
switching the running operating system in the user equipment from the first operating system to the second operating system, if a message corresponding to the second application is received.

4. The method for switching operating systems of claim 3, before the step of switching the running operating system in the user equipment from the first operating system to the second operating system, further comprising:
determining whether the message corresponding to the second application is an instant message;
and wherein the step of switching the running operating system in the user equipment from the first operating system to the second operating system comprises:
switching from the first operating system to the second operating system if the message corresponding to the second application is the instant message.

5. The method for switching operating systems of claim 1, wherein the user equipment can run at least two operating systems.

6. A device for switching operating systems, comprising:
a detection unit configured to detect whether a second application in a second operating system is ended when a running operating system in user equipment is switched from a first operating system to the second operating system;
a switching unit configured to switch the running operating system in the user equipment from the second operating system back to the first operating system when the second application is ended;
a running unit configured to run a first application, the first application being a running application in the first operating system before the user equipment switches the running operating system from the first operating system to the second operating system.

7. The device for switching operating systems of claim 6, wherein the device further comprises a display unit;
the display unit is configured to display a button icon when the running operating system in the user equipment is switched from the first operating system to the second operating system, the button icon being used to switch the running operating system in the user equipment from the second operating system back to the first operating system and run the first application;
the detection unit is configured to detect whether a user command corresponding to the button icon is existed;
the switching unit is configured to switch the running operating system in the user equipment from the second operating system back to the first operating system if the user command corresponding to the button icon is existed;
the running unit is further configured to run the first application.

8. The device for switching operating systems of claim 6, wherein:
the running unit is further configured to run the first application in the first operating system;
the device further comprises a receiving unit;
the receiving unit is configured to receive a message corresponding to the second application;
the switching unit is configured to switch the running operating system in the user equipment from the first operating system to the second operating system when the receiving unit receives the message corresponding to the second application.

9. The device for switching operating systems of claim 8, wherein the device further comprises a determination unit:
the determination unit is configured to determine whether the message corresponding to the second application is an instant message;
the switching unit is configured to switch from the first operating system to the second operating system when the determination unit determines that the message corresponding to the second application is the instant message.

10. A terminal comprising the device for switching operation systems of any of claims 6 to 9.
